# EUROPÄISCHE PATENTSCHRIFT

(11) **EP 2 614 349 B1**
(45) Veröffentlichungstag und Bekanntmachung des Hinweises auf die Patenterteilung: **10.12.2014**
(21) Anmeldenummer: 11739033.6
(22) Anmeldetag: 20.07.2011
(51) Int. Cl.: G07C 5/08, G06F 17/30, G01M 17/007

(54) **KRAFTFAHRZEUG-PRÜFGERÄT UND VERFAHREN ZUR IDENTIFIKATION VON KRAFTFAHRZEUGEN**
VEHICLE TEST APPARATUS AND METHOD FOR IDENTIFICATION OF VEHICLES
APPAREIL DE TEST DES VEHICULEL ET PROCEDE D'IDENTIFICATION DES VEHICULES

(30) Priorität: 10.09.2010 DE 102010040550
(43) Veröffentlichungstag der Anmeldung: 17.07.2013
(73) Patentinhaber: Robert Bosch GmbH, 70442 Stuttgart (DE)
(72) Erfinder: AMIRPOUR, Ramon, 73061 Ebersbach (DE); NOBIS, Guenter, 72622 Nuertingen (DE); MALMSHEIMER, Roger, 71573 Allmersbach Im Tal (DE)
(86) Internationale Anmeldenummer: PCT/EP2011/062427
(87) Internationale Veröffentlichungsnummer: WO 2012/031812

(56) Entgegenhaltungen:
- EP-A2- 1 083 421
- EP-A2- 2 166 514
- DE-A1- 19 615 008
- GB-A- 2 421 807

## Beschreibung

Die Erfindung betrifft ein Verfahren zur Identifikation von Kraftfahrzeugen für Kraftfahrzeug-Prüfgeräte, ein Kraftfahrzeug-Prüfgerät und ein System zur Identifikation von Kraftfahrzeugen.

### Stand der Technik

Die Offenlegungsschrift DE 199 42 844 A1 offenbart eine Anordnung zur Identifizierung von Kraftfahrzeugen bei der Untersuchung in einer Prüfstraße.

Die Druckschrift EP 0 306 362 B1 offenbart ein System zum Erfassen und Bearbeiten von Daten für die Prüfung von Kraftfahrzeugen.

DE 19 615 008 offenbart ein Verfahren zum Steuern eines Prüfstraßensystems für Kraftfahrzeuge mit einer Fahrzeugidentifikation

In einer Kraftfahrzeugwerkstatt, einer Kraftfahrzeugprüfstelle oder einer vergleichbaren Einrichtung sind bei heutigen Kraftfahrzeug-Prüfgeräten die Daten zur Identifikation eines konkreten Kraftfahrzeuges in unterschiedlichen prüfgerätespezifischen Datenbanken enthalten. Diese sind meist an der Aufgabe, die das spezielle Prüfgerät zu erfüllen hat, ausgerichtet. Prüfgeräte umfassen dabei beispielsweise Motortester, Steuergerätediagnosetester, Emissionsprüfgeräte, Achsvermessungsprüfgeräte und dergleichen. Jedes dieser Prüfgeräte hat in seiner Datenbank seine eigenen individuellen Identifikationsmerkmale für Kraftfahrzeuge, die sich auf diejenigen Aspekte beziehen, die für die jeweilige Prüftätigkeit von Belang sind.

Die individuellen Identifikationsmerkmale haben auch einen Einfluss auf einen spezifischen Anteil an der Benutzerschnittstelle, die die Identifikation des Kraftfahrzeuges für die jeweiligen Prüfgeräte betreffen, daher sind auch diese Anteile der Benutzerschnittstelle für die Prüfgeräte unterschiedlich.

In einer Werkstatt oder Prüfstelle muss ein Mitarbeiter oder Techniker das Kraftfahrzeug an jedem Prüfgerät neu identifizieren. Dabei werden unter Umständen alle Identifikationsdaten, welche bereits in einem vorangegangenen Prüfungsschritt verwendet worden sind, erneut erhoben. Der Mitarbeiter muss ferner für jedes Prüfgerät die spezielle Bedienung und Handhabung kennen.

### Offenbarung der Erfindung

Die Erfindung beruht auf der Idee, die Identifikation eines Kraftfahrzeuges in eine für alle Prüfgeräte einheitliche Basisidentifikation und eine Nachidentifikation, welche für jeweilige der verwendeten Prüfgeräte spezifisch ist, aufzuteilen und während eines Werkstattdurchlaufes bei Anwendung mehrerer unterschiedlicher Prüfgeräte die erhobenen Identifikationsdaten in nachfolgenden Arbeitsschritten weiter zu verwenden. Bei der Identifikation eines Kraftfahrzeuges für jedes Prüfgerät ist die Basisidentifikation daher immer der erste Identifikationsschritt, der vorteilhafterweise mit einer vereinheitlichten Benutzerschnittstelle durchgeführt werden kann. Dabei wird die Basisidentifikation vorteilhafterweise gleich zu Beginn eines Werkstattaufenthalts oder Prüfdurchlaufes für jedes konkrete Kraftfahrzeug durchgeführt.

Innerhalb eines Prüfdurchlaufes wird die weitere Nachidentifikation für andere Prüfgeräte bedarfsgemäß durchgeführt, d.h. es werden immer nur diejenigen Identifikationsdaten zusätzlich erhoben, welche zu diesem Zeitpunkt für das jeweilige Prüfgerät auch zusätzlich benötigt werden. Dadurch verteilt sich der Identifikationsvorgang des Kraftfahrzeuges vorteilhafterweise auf mehrere Arbeitsschritte und Arbeitsplätze mit unterschiedlichen Prüfgeräten und der anteilige Zeitaufwand für die Identifikation des Kraftfahrzeuges an den unterschiedlichen Prüfgeräten kann damit deutlich verringert werden.

Das erfindungsgemäße Verfahren nach Anspruch 1 umfasst dabei zunächst das Ermitteln von Basisidentifikationsdaten eines Kraftfahrzeuges. Über alle Prüfgeräte hinweg gibt es also eine einheitliche Basisidentifikation, die aus datentechnischen Gründen einen einheitlichen fahrzeugspezifischen Schlüssel umfasst. Dieser datentechnische Fahrzeugschlüssel stellt eine Brücke zu den prüfgerätespezifischen Datenbanken für die unterschiedlichen Prüfgeräte dar, so dass in der weiteren Nachidentifikation die in der Basisidentifikation bereits erhobenen Identifikationsdaten unmittelbar wiederverwendet werden können.

Danach werden erste zusätzliche Identifikationsdaten des Kraftfahrzeuges, welche für ein erstes Kraftfahrzeug-Prüfgerät spezifisch sind, und bei Bedarf zusätzliche zweite

Identifikationsdaten des Kraftfahrzeuges, welche für ein zweites Kraftfahrzeug-Prüfgerät spezifisch sind, ermittelt.

Da in einer Werkstatt oder Prüfstelle mehrere Kraftfahrzeuge geprüft werden, werden die Identifikationsdaten um ein das Kraftfahrzeug eindeutig kennzeichnendes Merkmal ergänzt. Dieses Merkmal ermöglicht im Werkstattablauf die Identifikation der zu dem Kraftfahrzeug bereits erhobenen Identifikationsdaten.

Das kennzeichnende Merkmal, die Basisidentifikationsdaten, die ersten zusätzlichen Identifikationsdaten und die zweiten zusätzlichen Identifikationsdaten werden auf einem Speichermedium gespeichert. Dadurch wird vorteilhafterweise während eines Prüfungsdurchlaufes die Wiederverwendung der gespeicherten Daten in unterschiedlichen Prüfgeräten sichergestellt, indem die Prüfgeräte auf sämtliche Identifikationsdaten, die auf dem Speichermedium abgelegt sind, zugreifen können.

Vorzugsweise ist das Speichermedium ein zentraler Server, der über ein Werkstatt- oder Prüfstellennetzwerk mit den einzelnen Prüfgeräten in Verbindung steht. Alternativ ist es auch möglich als Speichermedium ein RFID-Tag zu verwenden, der an dem jeweiligen Kraftfahrzeug angebracht ist. Ein Vorteil, der sich durch die Speicherung der Identifikationsdaten auf einem Speichermedium ergibt, ist, dass die Identifikationsdaten des Kraftfahrzeuges über den momentanen Werkstattaufenthalt oder Prüfungsdurchlauf hinaus permanent gespeichert werden können. Die Identifikationsdaten können in einer Kunden- oder Kraftfahrzeugdatenbank für zukünftige Werkstattaufenthalte oder Prüfungsdurchläufe gespeichert werden.

Vorzugsweise werden neben den ersten und zweiten zusätzlichen Identifikationsdaten, die für einzelne der Prüfgeräte spezifisch sind, auch dritte zusätzliche Identifikationsdaten ermittelt, die prüfgeräteübergreifend für eine Teilgruppe unterschiedlicher Prüfgeräte spezifisch sind. An den Prüfgeräten, die dieser Teilgruppe zugeordnet sind, erfolgt die gruppenspezifische Nachidentifikation einheitlich. Die dritten zusätzlichen Identifikationsdaten werden ebenfalls auf dem Speichermedium gespeichert.

Ein Vorteil des erfindungsgemäßen Verfahrens ist es, dass nicht alle Merkmale der Kraftfahrzeug-Identifikation normiert werden müssen, insbesondere nicht diejenigen der spezifischen zusätzlichen Identifikationsdaten (Nachidentifikation), welche nur für einzelne der Prüfgeräte spezifisch sind.

Die Erfindung schafft weiterhin ein Kraftfahrzeug-Prüfgerät nach Anspruch 6, welches dazu ausgelegt ist, zur Identifikation eines konkreten Kraftfahrzeuges Basisidentifikationsdaten des Kraftfahrzeuges und erste zusätzliche Identifikationsdaten des Kraftfahrzeuges, welche für das Kraftfahrzeug-Prüfgerät spezifisch sind, zum Betrieb an einem Kraftfahrzeug zu verwenden. Vorzugsweise bezieht das Kraftfahrzeug-Prüfgerät dabei die bereits vorhandenen Identifikationsdaten von einem Speichermedium wie einem zentralen Server oder einem RFID-Tag über ein Werkstatt- oder Prüfstellennetzwerk.

Schließlich schafft die Erfindung ein System zur Identifikation von Kraftfahrzeugen nach Anspruch 9 mit einer Mehrzahl von Kraftfahrzeug-Prüfgeräten und einem Speichermedium, auf welchem Basisidentifikationsdaten eines Kraftfahrzeuges und eine Mehrzahl von ersten Identifikationsdaten, welche jeweils für eines der Mehrzahl von Kraftfahrzeug-Prüfgeräten spezifisch sind, abgelegt sind, wobei die Kraftfahrzeug-Prüfgeräte dazu ausgelegt sind, zum Betrieb an einem Kraftfahrzeug die Basisidentifikationsdaten des Kraftfahrzeuges und erste Identifikationsdaten, welche für das jeweilige Kraftfahrzeug-Prüfgerät spezifisch sind, von dem Speichermedium abzurufen.

Bevorzugte Weiterbildungen sind Gegenstand der jeweiligen Unteransprüche.

Weitere Merkmale und Vorteile von Ausführungsformen der Erfindung ergeben sich aus der nachfolgenden Beschreibung mit Bezug auf die beigefügten Zeichnungen.

### Kurze Beschreibung der Zeichnungen

Es zeigen:
- Fig. 1: eine schematische Darstellung eines Kraftfahrzeug-Prüfgerätes gemäß einer Ausführungsform der Erfindung,
- Fig. 2: eine schematische Darstellung des Ablaufs eines Verfahrens zur Identifikation eines Kraftfahrzeugs gemäß einer weiteren Ausführungsform der Erfindung,
- Fig. 2a: eine schematische Darstellung des Ablaufs eines Verfahrens zur Identifikation eines Kraftfahrzeugs gemäß einer weiteren Ausführungsform der Erfindung,
- Fig. 3: eine schematische Darstellung eines Systems zur Identifikation von Kraftfahrzeugen gemäß einer weiteren Ausführungsform der Erfindung, und
- Fig. 4: eine schematische Darstellung des Ablaufs eines Verfahrens zur Identifikation eines Kraftfahrzeuges während eines Durchlaufs durch eine Werkstatt oder Prüfstelle gemäß einer weiteren Ausführungsform der Erfindung.

### Ausführungsformen der Erfindung

Kraftfahrzeug-Prüfgeräte im Sinne dieser Anmeldung sind nicht auf spezielle Kraftfahrzeug-Prüfgeräte festgelegt. Sie können beispielsweise Achsmessprüfgeräte, Motortester, Emissionsprüfgeräte, Bremsprüfgeräte, Stoßdämpferprüfgeräte, Spurprüfgeräte, Wiegeeinrichtungen, Bremsflüssigkeitsprüfgeräte, Schallpegelmesser, Dieselrauchgastester, Fahrwerksmessgeräte, Spurwinkelprüfgeräte, Lenkwinkeltester, Klimaanlagenprüfgeräte und dergleichen umfassen.

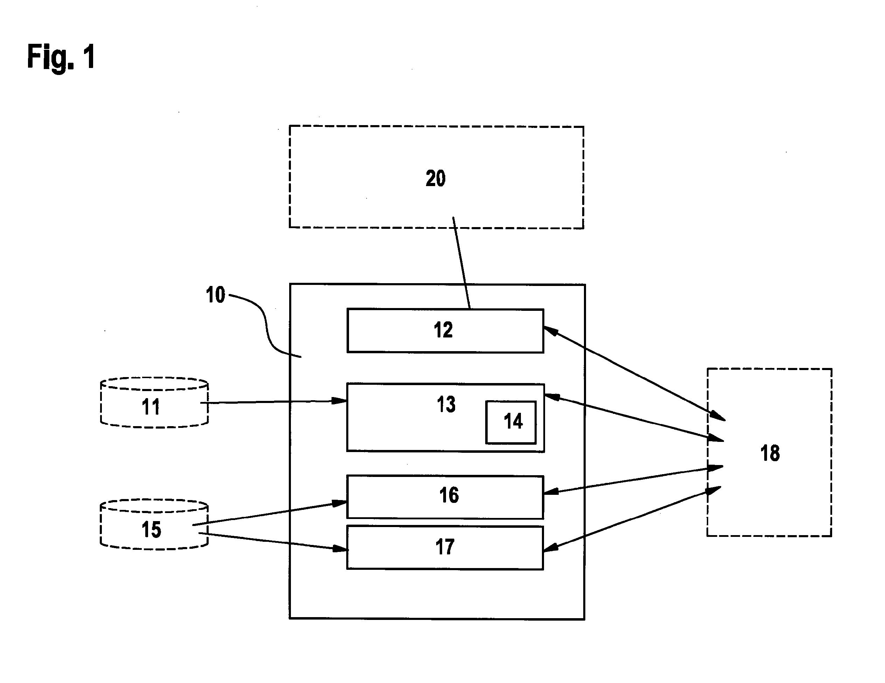

Fig. 1 zeigt eine schematische Darstellung eines Kraftfahrzeug-Prüfgerätes gemäß einer Ausführungsform der Erfindung.

Gezeigt wird ein Kraftfahrzeug-Prüfgerät 10. Das Kraftfahrzeug-Prüfgerät 10 kann beispielsweise ein Motortester sein. Das Kraftfahrzeug-Prüfgerät 10 benötigt zum funktionsgemäßen Betrieb Identifikationsdaten des zu prüfenden Kraftfahrzeuges. Die Identifikationsdaten umfassen dabei allgemeine Prüfgeräte-übergreifende Fahrzeugidentifikationsdaten 13. Die allgemeinen übergreifenden Fahrzeugidentifikationsdaten 13 können dabei beispielsweise Fabrikat, Hersteller, Fahrzeugart, Fahrzeugtyp, Fahrzeugausführung und dergleichen umfassen. Allgemein Prüfgeräte-übergreifende Fahrzeugidentifikationsdaten 13 können zu Basisidentifikationsdaten 13 zusammengefasst und für alle unterschiedlichen Prüfgeräte normiert werden. Für die Ermittlung dieser Basisidentifikationsdaten 13 kann eine Basisidentifikationsdatenbank 11 herangezogen werden.

Weiterhin umfassen die Identifikationsdaten einen spezifischen Identifikationsdatenanteil 17, der für das Kraftfahrzeug-Prüfgerät 10 individuell ist. Ein Motortester beispielsweise benötigt für den ordnungsgemäßen Betrieb die Angabe der Art des Motors oder die Zündfolge. Der spezifische Identifikationsdatenanteil 17 umfasst dabei alle Angaben, die für das jeweilige Kraftfahrzeug-Prüfgerät 10, hier den Motortester spezifisch sind und sonst für kein anderes Kraftfahrzeug-Prüfgerät zwingend benötigt werden. Die spezifischen Identifikationsdatenanteile 17 müssen nicht normiert werden und können für das jeweilige Kraftfahrzeug-Prüfgerät 10 individuell bleiben.

Die Identifikationsdaten umfassen außerdem einen spezifischen Identifikationsdatenanteil 16, der ebenfalls für den Betrieb des Kraftfahrzeug-Prüfgerät 10 benötigt wird. Die Identifikationsdaten des Identifikätionsdatenanteils 16 sind allerdings im Gegensatz zu dem spezifischen Identifikationsdatenanteil 17 sehr ähnlich zu Identifikationsdaten, die auch für den Betrieb anderer Kraftfahrzeug-Prüfgerät benötigt werden. Der spezifische Identifikationsdatenanteil 16 stellt daher einen produktgruppenspezifischen Identifikationsdatenanteil dar, der mit ähnlichen Anteilen anderer Kraftfahrzeug-Prüfgeräte zu produktgruppenspezifischen Nachidentifikationsdaten zusammengefasst und normiert werden kann. Für einen Motortester beispielsweise stellen die Angabe der Zylinderzahl und des verwendeten Kraftstoffs einen solchen spezifischen Identifikationsdatenanteil 16 dar, da die Angabe der Zylinderzahl und des verwendeten Kraftstoffs beispielsweise auch für den Betrieb eines Emissionsprüfgerätes benötigt wird. Ein Motortester und ein Emissionsprüfgerät werden daher in einer gemeinsamen Prüfgerätegruppe zusammengefasst und die Angaben der Zylinderzahl und des verwendeten Kraftstoffs können für alle Prüfgeräte dieser Prüfgerätegruppe normiert werden. Für einen Fachmann sollte es klar sein, dass weitere Prüfgerätegruppen mit anderen Prüfgeräten und entsprechenden weiteren produktgruppenspezifische Identifikationsdaten gebildet werden können. Es ist weiterhin möglich, dass einzelne Kraftfahrzeug-Prüfgeräte mehreren verschiedenen Prüfgerätegruppen zugeordnet sein können, für die jeweils verschiedene Identifikationsdatenanteile 16 gebildet werden können. Für die Ermittlung dieser Identifikationsanteile 16 und 17 kann eine prüfgerätespezifische Identifikationsdatenbank 15 herangezogen werden.

Um die datentechnische Zusammengehörigkeit aller Identifikationsdatenanteile 13, 16 und 17 für das Prüfgerät 10 und alle anderen unterschiedlichen Prüfgeräte sicherzustellen, umfassen die Basisidentifikationsdaten 13 eines Kraftfahrzeugs einen eindeutigen Fahrzeugschlüssel 14, zum Beispiel für "AUDI A6 Avant" den Fahrzeugschlüssel "8K2-B8". Der Fahrzeugschlüssel 14 kann aus der Basisidentifikationsdatenbank 11 automatisch ergänzt werden. Dieser eindeutige Fahrzeugschlüssel 14 bildet die datentechnische Brücke zwischen den unterschiedlichen Identifikationsdatenbanken 15 der unterschiedlichen Prüfgeräte. Dazu sind die fahrzeugspezifischen Identifikationsdaten in den prüfgerätespezifischen Identifikationsdatenbanken 15 einem oder mehreren Fahrzeugschlüsseln 14 zugeordnet, wobei in allen Identifikationsdatenbanken 15 ein einheitliches Set an Fahrzeugschlüsseln 14 verwendet wird. Der einheitliche Fahrzeugschlüssel 14 ermöglicht bei der Durchführung einer Nachidentifikation mit einem anderen Prüfgerät im Werkstattablauf einen schnellen Zugriff auf die spezifischen Inhalte der spezifischen Identifikationsdatenbank 15 dieses Prüfgerätes und den Start der Nachidentifikation.

Die eindeutige Zuordnung der ermittelten Identifikationsanteile 13, 16 und 17 zu einem konkreten Kraftfahrzeug 20 erfolgt in der Werkstatt oder der Prüfstelle durch mindestens ein eindeutiges Merkmal des konkreten Kraftfahrzeugs 20. Dieses Identifikationsmerkmal wird als Identifikationsanteil 12 eingeführt und kann dabei das Kraftfahrzeug-Kennzeichen, die Fahrgestellnummer, eine Herstellerseriennummer, eine Kundennummer oder ein ähnliches Merkmal oder eine Kombination dieser Merkmale umfassen, welches eine eineindeutige Zuordnung zu dem Kraftfahrzeug 20 ermöglicht. Die ermittelten Identifikationsanteile 13, 16 und 17 bilden mit dem Identifikationsmerkmal 12 zusammen den Fahrzeugidentifikationsdatensatz für das Prüfgerät 10 und für weitere Prüfgeräte im Werkstattablauf.

Eine Übertragung von Identifikationsdaten von einem Prüfgerät auf ein anderes im Werkstattablauf kann daher erfolgen über:
- das Identifikationsmerkmal 12 des konkreten Kraftfahrzeuges
- die einheitliche Basisidentifikation 13 ergänzt um einen einheitlichen Fahrzeugschlüssel 14
- die Speicherung aller Fahrzeugidentifikationsdaten in einer einheitlichen Form in einem von allen Prüfgeräten auslesbaren Speichermedium 18
- das Einlesen der gespeicherten Fahrzeugidentifikationsdaten und
- die Verwendung eines Sets einheitlicher Fahrzeugschlüssel in allen prüfgerätespezifischen Identifikationsdatenbanken.

Sämtliche Identifikationsdaten 12, 13, 16 und 17 werden für die Übertragung in andere Prüfgeräte auf einem Speichermedium 18 abgelegt. Das Speichermedium 18 kann dabei ein zentraler Server in einem werkstatt- oder prüfstelleninternen Netzwerk, ein RFID-Tag oder ein ähnliches Medium zur Speicherung von Kraftfahrzeugdaten sein. Das Kraftfahrzeug-Prüfgerät 10 ist dazu ausgelegt, die Identifikationsdaten 12, 13, 16 und 17 von dem Speichermedium 18 auszulesen und eventuell neu erfasste Identifikationsdaten auf das Speichermedium 18 zu speichern. Das Auslesen und das Speichern erfolgt nach dem Fachmann bekannten Verfahren wie beispielsweise dem drahtlosen oder dem drahtgebundenen Datenaustausch. Wenn auf dem Speichermedium 18 Identifikationsdaten für mehrere Kraftfahrzeuge gespeichert sind, dann kann das Kraftfahrzeug-Prüfgerät 10 weiterhin so ausgelegt sein, dass der zu dem Kraftfahrzeug gehörenden Fahrzeugidentifikationdatensatz mit den Identifikationsdaten 12, 13, 16 und 17 anhand des eindeutigen Identifikationsmerkmals 12 aus mehreren auf dem Speichermedium 18 vorhandenen Fahrzeugidentifikationdatensätzen auszuwählen ist.

Weil die Basisidentifikation eines Kraftfahrzeugs an jedem Arbeitsplatz der Werkstatt oder der Prüfstelle möglich sein soll, kann jedes Prüfgerät mit der Basisidentifikationsdatenbank 11 ausgestattet sein oder die Basisidentifikationsdatenbank 11 wird auf dem zentralen Server in der Werkstatt oder der Prüfstelle installiert und zum Zweck der Basisidentifikation eines Kraftfahrzeugs können alle Prüfgeräte über ein internes Netzwerk auf diese zentrale Basisidentifikationsdatenbank 11 zugreifen. Es kann auch möglich sein, auf eine Basisidentifikationsdatenbank 11 außerhalb der Werkstatt oder der Prüfstelle, beispielsweise über das Internet zugreifen zu können.

Die prüfgerätespezifischen Datenbanken 15 können in den jeweiligen Prüfgeräten integriert sein. Alternativ ist es auch hier möglich die prüfgerätespezifischen Datenbanken 15 auf einem zentralen Server in der Werkstatt oder der Prüfstelle zu installieren und alle Prüfgeräte können über ein internes Netzwerk auf diese prüfgerätespezifischen Datenbanken 15 zugreifen. Es kann auch möglich sein, auf prüfgerätespezifische Datenbanken 15 außerhalb der Werkstatt oder der Prüfstelle, beispielsweise über das Internet zugreifen zu können.

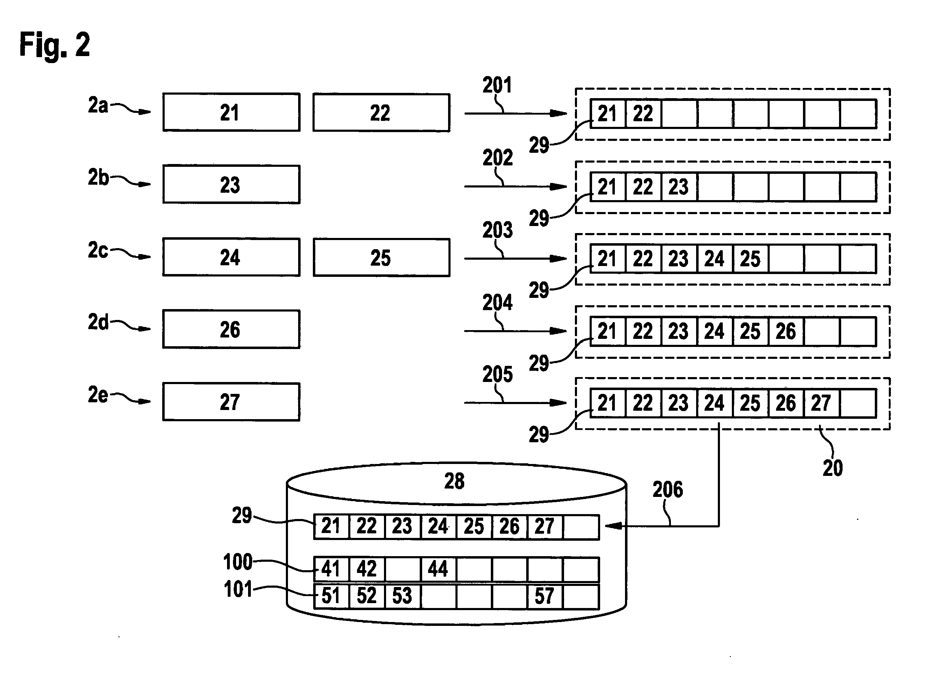

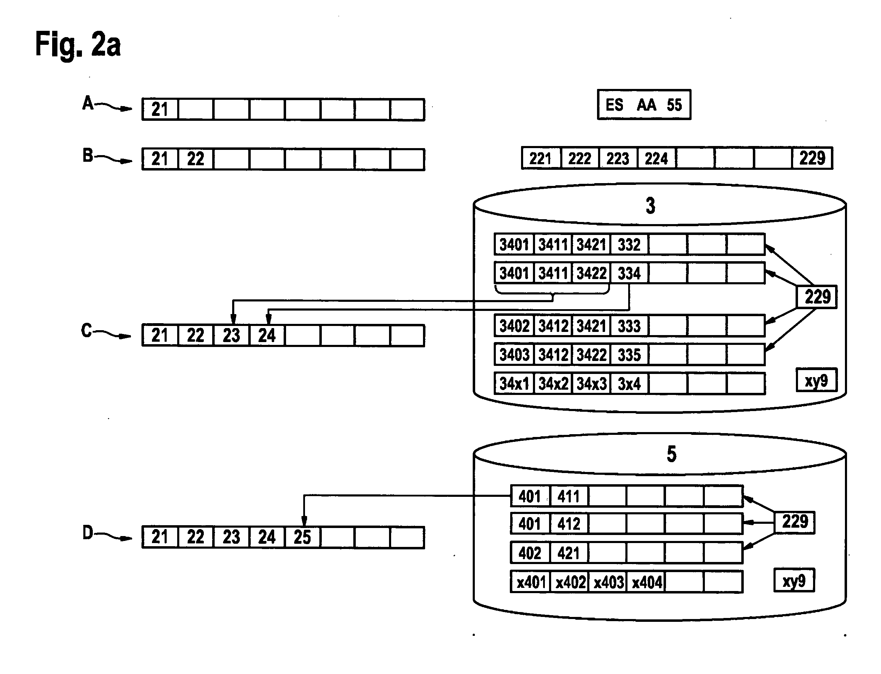

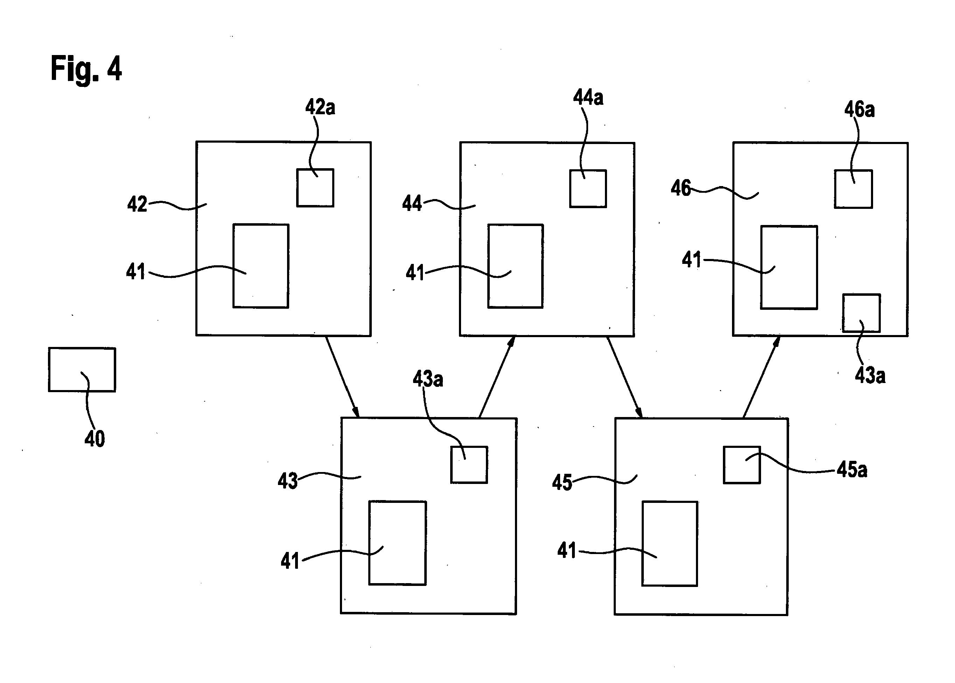

Fig. 2 zeigt eine schematische Darstellung des Ablaufs eines Verfahrens zur Identifikation eines Kraftfahrzeugs für einen Werkstatt- oder Prüfungsdurchlauf gemäß einer Ausführungsform der Erfindung. Die Erläuterungen zu Figur 2 greifen unter anderem auf die Darstellung aus Fig. 4 zurück, in der eine schematische Darstellung des Ablaufs eines Verfahrens zur Identifikation eines Kraftfahrzeuges 41 während eines Werkstattdurchlaufs mit mehreren unterschiedlichen Prüfgeräten gemäß einer Ausführungsform der Erfindung gezeigt ist.

Wie in Fig. 4 gezeigt, wird ein Schritt 2a zweckmäßigerweise zu Beginn des Prüfungsdurchlaufes 40 eines Kraftfahrzeuges 41 durchgeführt. Beispielsweise wird mit einem PC 42a auf dem Arbeitsplatz der Fahrzeugannahme 42 einer Werkstatt oder mit dem Steuerrechner einer dort installierten Prüfstraße 42a ein Datensatz 29 mit einem geeigneten Identifikationsmerkmal 21 am Kraftfahrzeug 41 initialisiert, beispielsweise mit dem Kraftfahrzeug-Kennzeichen, der Fahrgestellnummer, der Herstellerseriennummer oder dergleichen. Zusätzlich werden in dem ersten Schritt 2a eines Werkstattdurchlaufs in Fig. 2 mit Hilfe einer nicht dargestellten Basisidentifikationsdatenbank die Basisidentifikationsdaten 22 mit einem automatisch angehängten einheitlichen Fahrzeugschlüssel eines Kraftfahrzeuges 41 (siehe Fig. 4) ermittelt. Diese zweiten Fahrzeugidentifikationsdaten 22 werden in dem initialisierten Datensatz 29 ergänzt und der Datensatz 29 in einem Speicherschritt 201 auf einem Speichermedium 20 abgespeichert. Das Speichermedium 20 kann hierbei ähnlich wie das Speichermedium 18 in Fig. 1 ein zentraler Server, ein RFID-Tag oder ein vergleichbares Speichermedium darstellen. In der Fahrzeugannahme 42 können optional weitere Schritte des Prüfungsdurchlaufes 40 vorgenommen werden, wie beispielsweise eine Bremsenprüfung oder eine Schnelldiagnose, die aktuell keine weitere Fahrzeugidentifikation erfordern.

In einem zweiten Schritt 2b in Fig. 2 wird eine erste Prüfung 43 (siehe Fig. 4) an dem Kraftfahrzeug 41 vorgenommen, beispielsweise eine Diagnose mittels eines Steuerdiagnosetesters 43a. Die erste Prüfung 43 kann an einem Arbeitsplatz in der Werkstatt durchgeführt werden. Hierzu wird der im ersten Schritt 2a gespeicherte Datensatz 29 mit dem Steuergerätediagnosetester 43a anhand des Identifikationsmerkmals 21 im Speichermedium 20 identifiziert, aus dem Speichermedium 20 eingelesen und mit diesen Daten und mit der (nicht gezeigten) Steuergerätediagose-Identifikationsdatenbank eine Nachidentifikation für die Steuergerätediagnose durchgeführt. Im Rahmen dieser Nachidentifikation werden insbesondere die Basisidentifikationsdaten 22 mit dem einheitlichen Fahrzeugschlüssel verwendet und weitere Identifikationsdaten 23 erhoben, welche für die Steuergerätediagnose notwendig sind. Die Identifikationsdaten 23 werden an den ausgelesenen Datensatz 29, der bereits das Identifikationsmerkmal 21 und die Basisidentifikationsdaten 22 enthält, angehängt und der erweiterte Datensatz 29 auf dem Speichermedium 20 in einem Speicherschritt 202 gespeichert. Dabei kann der vorherige Datensatz 29 mit dem neuen Datensatz 29 überschrieben werden.

In einem dritten Schritt 2c in Fig. 2 wird eine zweite Prüfung 44 (siehe Fig. 4) an dem Kraftfahrzeug 41 vorgenommen, beispielsweise eine Abgasuntersuchung mit einem Abgasprüfgerät 44a. Die zweite Prüfung 44 kann an demselben Arbeitsplatz wie die erste Prüfung 43 durchgeführt werden, oder an einem anderen Arbeitsplatz in der Werkstatt. Dazu werden der im zweiten Schritt 2b gespeicherte Identifikationsdatensatz 29 mit dem Abgasprüfgerät 44a anhand des Identifikationsmerkmals 21 im Speichermedium 20 identifiziert und der komplette Datensatz 29 aus dem Speichermedium 20 eingelesen. Nun wird eine für das Abgasprüfgerät 44a spezifische Nachidentifikation durchgeführt und mit den ausgelesenen Identifikationsdaten und der (nicht gezeigten) Abgastest-Identifikationsdatenbank werden die Identifikationsdaten 24 ermittelt, beispielsweise die Zylinderzahl des zu prüfenden Kraftfahrzeuges 41. Die Zylinderzahl wird auch für einen der Abgasprüfung nachfolgenden Motortest benötigt, daher werden die Identifikationsdaten 24 der Gruppe der produktgruppenspezifischen Identifikationsdaten zugeordnet, die für eine Teilgruppe von Prüfgeräten, hier beispielsweise das Abgasprüfgerät 44a und das Motortestgerät 45a (siehe Fig. 4), spezifisch ist.

Außerdem werden Identifikationsdaten 25 ermittelt, die ausschließlich für die Abgasuntersuchung spezifisch sind, und daher den prüfgerätespezifischen Identifikationsdaten zugeordnet werden. Sowohl die produktgruppenspezifischen Identifikationsdaten 24 als auch die prüfgerätespezifischen Identifikationsdaten 25 werden an den ausgelesenen Datensatz 29 für das Kraftfahrzeug 41 angefügt und der ergänzte Datensatz 29 auf dem Speichermedium 20 in einem Speicherschritt 203 gespeichert und dabei der vorherige Datensatz 29 gegebenenfalls überschrieben.

In einem vierten Schritt 2d in Fig. 2 wird eine dritte Prüfung 45 (siehe Fig. 4) an dem Kraftfahrzeug 41 vorgenommen, beispielsweise ein Motortest mit einem Motortestgerät 45a. Die produktgruppenspezifischen Nachidentifikationsdaten liegen auf dem Speichermedium 20 bereits vor, so dass nach dem Identifizieren und Auslesen des Datensatzes 29 hier beispielsweise die Zylinderzahl nicht mehr separat ermittelt werden muss, sondern den Identifikationsdaten 24 entnommen werden kann. Es werden dann mit der (nicht gezeigten) Motortest-Identifikationsdatenbank weitere prüfgerätespezifische Identifikationsdaten 26 ermittelt, die für das Motortestgerät 45a spezifisch sind. Die prüfgerätespezifischen Identifikationsdaten 26 werden dem ausgelesenen Datensatz 29, d.h. den bereits vorhandenen Identifikationsdaten 21 bis 25 hinzugefügt und der komplettierte Datensatz 29 auf dem Speichermedium 20 in einem Speicherschritt 204 gespeichert. Der bisher im Speichermedium 20 für das Kraftfahrzeug 41 vorliegende Datensatz 29 kann dabei durch den neuen Datensatz 29 ersetzt werden.

In einem fünften Schritt 2e in Fig. 2 wird eine vierte Prüfung 46 (siehe Fig. 4) an dem Kraftfahrzeug 41 vorgenommen, beispielsweise eine Fahrwerkvermessung mit einem Fahrwerkprüfgerät 46a. Mit dem Fahrwerkprüfgerät 46a wird der im vierten Schritt 2d gespeicherte Identifikationsdatensatz 29 anhand des Identifikationsmerkmals 21 im Speichermedium 20 identifiziert und der komplette Datensatz 29 aus dem Speichermedium 20 eingelesen. Mit den ausgelesenen Identifikationsdaten, insbesondere den Identifikationsdaten 22 mit dem einheitlichen Fahrzeugschlüssel, werden mit der (nicht gezeigten) Identifikationsdatenbank für die Fahrwerksvermessung die für die Fahrwerkvermessung an dem Kraftfahrzeug 41 nötigen Identifikationsdaten 27 ermittelt. Die prüfgerätespezifischen Identifikationsdaten 27 werden dem ausgelesenen Datensatz 29 mit den Identifikationsdaten 21 bis 26 hinzugefügt und der ergänzte Datensatz 29 auf dem Speichermedium 20 in einem Speicherschritt 205 gespeichert. Dabei kann der vorherige Datensatz 29 überschrieben werden.

Nach Abschluss der Fahrwerkvermessung kann beispielsweise noch eine Kalibrierung des Lenkwinkels mithilfe des Steuergerätediagnosetesters 43a erfolgen. Mit dem Steuergerätediagnosetester 43a kann der Datensatz 29 in dem Speichermedium 20 identifiziert und mit den Identifikationsdaten 21 bis 27 aus dem Speichermedium 20 ausgelesen werden. Für den Steuergerätediagnosetester 43a können bereits alle notwendigen Identifikationsdaten 21, 22 und 23 in dem Datensatz 29 auf dem Speichermedium 20 vorhanden sein, so dass keine weitere prüfgerätespezifischen Nachidentifikation nötig ist. Die benötigten Identifikationsdaten 22 und 23 können automatisch extrahiert und eine Lenkwinkelkalibrierung ohne den bisher notwendigen Arbeitsschritt der Fahrzeugidentifikation durchgeführt werden.

Nach Abschluss des Werkstattdurchlaufes 40 kann der ermittelte Identifikationsdatensatz 29 in einem Speicherschritt 206 in eine Kunden- oder Werkstattdatenbank 28 übertragen werden und steht dort als neuer Kundendatensatz 29 für das konkrete Kraftfahrzeug 41 für mögliche zukünftige Werkstattbesuche bzw. Prüfungsdurchläufe zur Verfügung. Der Kundendatensatz 29 kann wie bisher auch weitere Informationen zum konkreten Fahrzeug 41 wie zum Beispiel die Prüfergebnisse enthalten. Möglicherweise bereits vorher in der Werkstattdatenbank gespeicherte Kundendatensätze, welche Identifikationsdaten 41, 42, 44 bzw. 51, 52, 53 und 57 umfassen, sind mit 100 und 101 bezeichnet.

Fig. 2a zeigt eine schematische Darstellung des Ablaufs eines Verfahrens zur Identifikation eines Kraftfahrzeugs gemäß einer weiteren Ausführungsform der Erfindung.

In einem ersten Schritt A wird ein Identifikationsmerkmal 21 ermittelt, welches für ein konkretes Kraftfahrzeug eindeutig ist, hier beispielsweise das Kraftfahrzeug-Kennzeichen. Das Identifikationsmerkmal 21 stellt in dem Identifikationsdatensatz einen ersten Identifkationsdatenanteil dar.

In einem zweiten Schritt B wird die Basisidentifikation des Kraftfahrzeugs vorgenommen. Die Basisidentifikationsdaten 22 können dabei mehrere Basisidentifikationsdatenanteile 221 bis 224 umfassen, beispielsweise 221 für die Kraftfahrzeugmarke, zum Beispiel "Audi", 222 für die Baureihe, zum Beispiel "A6", 223 für die Bauform, zum Beispiel "Avant" und 224 für das Baujahr, zum Beispiel "2009". Es versteht sich, dass noch weitere Basisidentifikationsdatenanteile zu den Basisidentifikationsdaten 22 hinzugefügt werden können. Zuletzt wird der zur Gesamtheit dieser Basisidentifikationsdaten gehörende datentechnische Fahrzeugschlüssel 229 mit dem beispielhaften Inhalt "8K2-B8" angehängt. Die Basisidentifikationsdaten 22 können dabei einer Basisidentifikationsdatenbank entnommen werden.

In einem dritten Schritt C werden produktgruppenspezifische Identifikationsdaten 23 und prüfgerätespezifische Identifikationsdaten 24 erhoben. Beispielsweise können die produktgruppenspezifischen Identifikationsdaten 23 und die prüfgerätespezifischen Identifikationsdaten 24 einer Motortest-Identifikationsdatenbank 3 entnommen werden. Dabei sind in der Motortest-Identifikationsdatenbank 3 Identifikationsdatensätze abgelegt, die über den Fahrzeugschlüssel 229 identifizierbar sind. In der Motortest-Identifikationsdatenbank 3 können noch weitere Identifikationsdatensätze abgelegt sein, die über andere Fahrzeugschlüssel xy9 identifizierbar sind. Für die produktgruppenspezifischen Identifikationsdaten 23 können nun produktgruppenspezifische Identifikationsdaten aus der Motortest-Identifikationsdatenbank 3 übernommen werden, beispielsweise für den Hubraum, zum Beispiel 3401 für "2 Liter", 3402 für "2,4 Liter" oder 3403 für "2,7 Liter", für die Zylinderanzahl, zum Beispiel 3411 für "4" oder 3412 für "6", und für die Kraftstoffart, zum Beispiel 3421 für "Benzin" oder 3422 für "Diesel". Im vorliegenden Beispiel werden die Daten 2 Liter Hubraum, 4 Zylinder und Kraftstoffart Diesel aus der Motortest-Identifikationsdatenbank 3 in den Identifikationsdatensatz übernommen.
Diese produktgruppenspezifische Identifikationsdaten könnten in gleicher Weise auch aus der nicht dargestellten Abgastest-Identifikationsdatenbank 4 übernommen werden, weshalb diese hier mit "34xx" bezeichnet sind.
Für die prüfgerätespezifischen Identifikationsdaten 24 können dann prüfgerätespezifische Identifikationsdaten aus der Motortest-Identifikationsdatenbank 3 übernommen werden, beispielsweise für das Einspritzsystem, zum Beispiel 331 für das Einspritzsystem "Saugrohreinspritzung MExx", 332 für das Einspritzsystem "Benzindirekteinspritzung MExy", 333 für das Einspritzsystem "Benzindirekteinspritzung MEyx", 334 für das Einspritzsystem "Common Rail MEyx" oder 335 für das Einspritzsystem "Common Rail MEyy". Im vorliegenden Beispiel werden die Daten Einspritzsystem "Common Rail MEyx" aus der Motortest-Identifikationsdatenbank 3 in den Identifikationsdatensatz übernommen.

In einem vierten Schritt D werden weitere prüfgerätespezifische Identifikationsdaten 25 erhoben, hier beispielsweise prüfgerätespezifische Identifikationsdaten am Beispiel der Identifikationsdatenbank 5 für die Fahrwerksvermessung. Dabei sind in der Identifikationsdatenbank 5 für die Fahrwerksvermessung Identifikationsdatensätze abgelegt, die über den Fahrzeugschlüssel 229 identifizierbar sind. In der Identifikationsdatenbank 5 für die Fahrwerksvermessung können noch weitere Identifikationsdatensätze abgelegt sein, die über andere Fahrzeugschlüssel xy9 identifizierbar sind. Für die prüfgerätespezifischen Identifikationsdaten 25 können prüfgerätespezifische Identifikationsdaten aus der Identifikationsdatenbank 5 für die Fahrwerksvermessung übernommen werden, beispielsweise Daten für das Fahrwerk, zum Beispiel 401 für das Fahrwerk "Normal" oder 402 für "Sportfahrwerk", Daten für die Federungsart, zum Beispiel 411 für die Federungsart "Stahlfeder" oder 412 für "Luftfeder" und weitere Daten, zum Beispiel 421 für eine "Niveauregulierung an der Hinterachse". Im vorliegenden Beispiel werden die Daten 401 für das Fahrwerk "Normal" und 411 für die Federungsart "Stahlfeder" in den Identifikationsdatensatz übernommen.

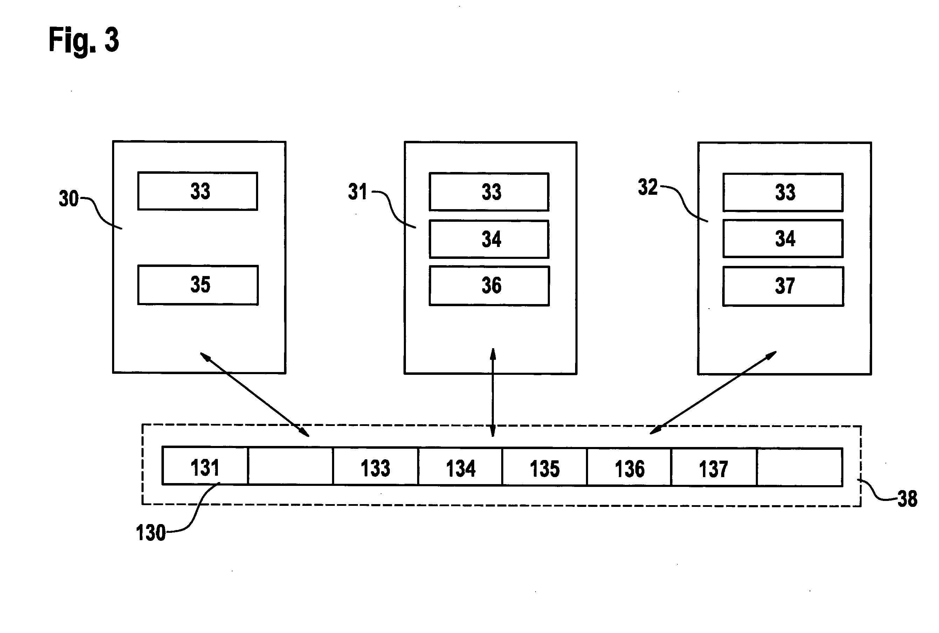

Fig. 3 zeigt eine schematische Darstellung eines Systems zur Identifikation von Kraftfahrzeugen für Kraftfahrzeug-Prüfgeräte 30, 31 und 32 gemäß einer Ausführungsform der Erfindung. Das Kraftfahrzeug-Prüfgerät 30 ist beispielsweise ein Achsmessprüfgerät, das Kraftfahrzeug-Prüfgerät 31 beispielsweise ein Motortester und das Kraftfahrzeug-Prüfgerät 32 beispielsweise ein Emissionsprüfgerät. Es versteht sich, dass die funktionelle Zuweisung der Kraftfahrzeug-Prüfgeräte in Fig. 3 nur beispielhafter Natur ist und die Kraftfahrzeug-Prüfgeräte 30, 31 und 32 auch andere Kraftfahrzeug-Prüfgeräte darstellen können. Auch die Anzahl unterschiedlicher Prüfgeräte in dem System zur Identifikation von Kraftfahrzeugen kann unterschiedlich sein.

Das Kraftfahrzeug-Prüfgerät 30 benötigt zum Betrieb erste allgemeine übergreifende Kraftfahrzeugidentifikationsdaten, das Kraftfahrzeug-Prüfgerät 31 zweite allgemeine übergreifende Kraftfahrzeugidentifikationsdaten und das Kraftfahrzeug-Prüfgerät 32 dritte allgemeine übergreifende Kraftfahrzeugidentifikationsdaten. Die Schnittmenge der allgemeinen übergreifenden Kraftfahrzeugidentifikationsdaten wird normiert und in für alle Kraftfahrzeuge einheitlichen Basisidentifikationsdaten 33 für die Kraftfahrzeug-Prüfgeräte 30, 31 und 32 zusammengefasst. Dabei werden insbesondere die Anzahl, der Inhalt und die Struktur der in den Basisidentifikationsdaten 33 zusammengefassten Kraftfahrzeugdaten sowie ein einheitlicher Fahrzeugschlüssel zur Unterscheidung aller Basisidentifikationsdatensätze normiert. Alle Basisidentifikationsdatensätze können in einer für alle Prüfgeräte einheitlichen Basisidentifikationsdatenbank zusammengefasst werden. Diese Basisidentifikationsdatenbank kann auf jedem Prüfgerät und/oder auf einem zentralen Server in der Werkstatt oder außerhalb der Werkstatt installiert sein. Bei einer Serverinstallation kann vom Prüfgerät aus ein Fernzugriff auf den Server vorhanden sein.

Die jeweiligen Kraftfahrzeug-Prüfgeräte 30, 31 und 32 benötigen außerdem prüfgerätespezifische Identifikationsdaten 35, 36 bzw. 37, die individuell für den Betrieb des jeweiligen Kraftfahrzeug-Prüfgerätes notwendig sind. Diese prüfgerätespezifischen Identifikationsdaten 35, 36 und 37 sind nicht notwendigerweise zu normieren, da sie nicht prüfgeräteübergreifend benötigt werden. Für den Zustand nach der Vereinheitlichung der Fahrzeugidentifikation ist jeder prüfgerätespezifische Identifikationsdatensatz zusätzlich mit dem einheitlichen Fahrzeugschlüssel der Basisidentifikation zu kennzeichnen, um einen automatisierten Austausch von Identifikationsdaten über diesen Fahrzeugschlüssel zwischen unterschiedlichen Kraftfahrzeug-Prüfgeräten 30, 31 und 32 bzw. deren spezifischen Identifkationsdatenbanken zu ermöglichen. Alle prüfgerätespezifischen Identifikationsdatensätze sind in einer für das jeweilige Prüfgerät spezifischen Identifikationsdatenbank zusammengefasst. Zum Beispiel wäre das für das Prüfgerät 30 eine Identifikationsdatenbank für die Achsvermessung, für das Prüfgerät 31 eine Motortest-Identifikationsdatenbank und für das Prüfgerät 32 eine Abgastest-Identifikationsdatenbank. Diese prüfgerätespezifischen Identifikationsdatenbanken können auf jeweiligen Prüfgerät oder auf einem zentralen Server in der Werkstatt oder außerhalb der Werkstatt installiert sein. Bei einer Serverinstallation kann vom Prüfgerät aus ein Fernzugriff auf den Server vorhanden sein.

Daneben können einzelne Kraftfahrzeug-Prüfgeräte zu Teilgruppen zusammengefasst werden, wenn sie Identifikationsdaten benötigen, die in ihrem Aufbau und Inhalt identisch oder sehr ähnlich sind. Hier benötigen beispielsweise das Kraftfahrzeug-Prüfgerät 31 und das Kraftfahrzeug-Prüfgerät 32 Identifikationsdaten, die ähnlich sind und dieselbe Bedeutung haben. Diese Identifikationsdaten werden zu produktgruppenspezifischen Identifikationsdaten 34 zusammengefasst und einer Teilgruppe von Kraftfahrzeug-Prüfgeräten zugeordnet, die hier beispielhaft von den Kraftfahrzeug-Prüfgeräten 31 und 32 gebildet wird. Diese produktgruppenspezifischen Identifikationsdaten 34 stellen jedoch jeweils eine übereinstimmende Teilmenge der Identifikationsdaten der Identifikationsdatensätze des hier beispielhaften Motortesters und Abgastesters dar, die in einer normierten Form als produktgruppenspezifische Identifikationsdaten 34 neben den prüfgerätespezifischen Identifikationsdaten 36 oder 37 in dem vorgesehenen Bereich der Fahrzeugidentifikationsdaten abgelegt werden. Aus diesem Grund wird keine zusätzliche Identifikationsdatenbank benötigt.

Es ist selbstverständlich möglich, dass noch weitere Kraftfahrzeug-Prüfgeräte zu einer Teilgruppe gehören und/oder dass ein einzelnes Kraftfahrzeug-Prüfgerät zu mehreren Teilgruppen zugeordnet werden kann. Die produktgruppenspezifischen Identifikationsdaten 34 werden auf die jeweiligen Kraftfahrzeug-Prüfgerät 31 und 32 der zugeordneten Teilgruppe normiert.

In Fig.3 erfolgt der Aufbau eines Identifikationsdatensatzes 130 für ein konkretes Kraftfahrzeug beispielhaft in folgenden Schritten:
Von einem beliebigen Prüfgerät 30, 31 oder 32 oder von einem nicht dargestellten normalen Werkstatt-PC wird ein neuer Identifikationsdatensatz 130 mit einem eindeutigen Merkmal 131 des Kraftfahrzeuges initialisiert. Anschließend werden vorzugsweise mit dem gleichen Prüfgerät mit Hilfe der Basisidentifikationsdatenbank die Basisidentifikationsdaten 133 ermittelt und der Identifikationsdatensatz 130 auf einem Speichermedium 38 für den weiteren Werkstattdurchlauf abgelegt. In der sich aus praktischen Erwägungen ergebenden Reihenfolge des Werkstattablaufes werden mit Hilfe der Identifikationsdatenbank für die Achsvermessung, der Motortest-Identifikationsdatenbank und der Abgastest-Identifikationsdatenbank die produktgruppenspezifischen Identifikationsdaten 134 und die prüfgerätespezifischen Identifikationsdaten 135, 136 und 137 ermittelt und die jeweils ergänzten Identifikationsdatensätze auf dem Speichermedium 38 sukzessive aktualisiert abgespeichert. Das Speichermedium 38 kann ähnlich wie das Speichermedium 20 in Fig. 2 oder das Speichermedium 18 in Fig. 1 beispielsweise ein zentraler Server oder ein RFID-Tag sein. Die jeweiligen Kraftfahrzeug-Prüfgeräte 30, 31 und 32 können auf die auf dem Speichermedium 38 gespeicherten Datensätze jeweils im Lese- und Schreibzugriff zurückgreifen. So kann beispielsweise das Kraftfahrzeug-Prüfgerät 31 in dem Speichermedium 38 den Identifikationsdatensatz 130 für das Kraftfahrzeug 1 mittels des Identifikationsmerkmals 131 identifizieren, den Identifikationsdatensatz 130 einlesen und mit den Basisidentifikationsdaten 133, den produktgruppenspezifischen Identifikationsdaten 134 und den prüfgerätespezifischen Identifikationsdaten 136 alle für den Prüfbetrieb notwendigen Identifikationsdaten zu erhalten. Umgekehrt können von dem Kraftfahrzeug-Prüfgerät 31 zu einem anderen beispielsweise eingelesenen Identifikationsdatensatz 130 bereits vorhandene Identifikationsdaten 133 und 135 um erstmalig ermittelte Identifikationsdaten, beispielsweise die produktgruppenspezifischen Identifikationsdaten 134 und die produktspezifischen Identifikationsdaten 136 ergänzt und der so ergänzte Identifikationsdatensatz 130 auf das Speichermedium 38 in einem Speicherschritt übertragen werden.

## Patentansprüche

1. Verfahren zur Identifikation eines Kraftfahrzeuges für eine Mehrzahl von Kraftfahrzeug-Prüfgeräten (30, 31, 32), umfassend:
Ermitteln eines eindeutigen Merkmals (21) des Kraftfahrzeuges;
Ermitteln von Basisidentifikationsdaten (22) des Kraftfahrzeuges;
Speichern des eindeutigen Merkmals (21) und der Basisidentifikationsdaten (22) in einem Identifikationsdatensatz (29) für dieses Kraftfahrzeug auf einem Speichermedium (20);
Identifizieren des auf dem Speichermedium (20) zu dem Kraftfahrzeug gehörenden Identifikationsdatensatzes (29) anhand des eindeutigen Merkmals (21) mit einem ersten (30) der Mehrzahl von Kraftfahrzeug-Prüfgeräten;
Auslesen des identifizierten Identifikationsdatensatzes (29) des Kraftfahrzeuges aus dem Speichermedium (20);
Ermitteln von ersten Identifikationsdaten (23) des Kraftfahrzeuges (1), welche für das erste (30) der Mehrzahl von Kraftfahrzeug-Prüfgeräten spezifisch sind;
Ergänzen des ausgelesenen Identifikationsdatensatzes (29) mit den ersten Identifikationsdaten (23);
Speichern des ergänzten Identifikationsdatensatzes (29) auf dem Speichermedium (20);
Identifizieren des auf dem Speichermedium (20) zu dem Kraftfahrzeug gehörenden Identifikationsdatensatzes (29) anhand des eindeutigen Merkmals (21) mit einem zweiten (31) der Mehrzahl von Kraftfahrzeug-Prüfgeräten;
Auslesen des identifizierten Identifikationsdatensatzes (29) des Kraftfahrzeuges aus dem Speichermedium (20);
Ermitteln von zweiten Identifikationsdaten (25) des Kraftfahrzeuges, welche für das zweite (31) der Mehrzahl von Kraftfahrzeug-Prüfgeräten spezifisch sind;
Ergänzen des ausgelesenen Identifikationsdatensatzes (29) mit den zweiten Identifikationsdaten (25); und
Speichern des ergänzten Identifikationsdatensatzes (29) auf dem Speichermedium (20).

2. Verfahren nach Anspruch 1, wobei die Basisidentifikationsdaten (22) des \ Identifikationsdatensatzes (29) für den Betrieb aller der Mehrzahl von Kraftfahrzeug-Prüfgeräten (30, 31, 32), die ersten Identifikationsdaten (23) nur für den Betrieb des ersten (30) der Mehrzahl von Kraftfahrzeug-Prüfgeräten und die zweiten Identifikationsdaten (25) nur für den Betrieb des zweiten (31) der Mehrzahl von Kraftfahrzeug-Prüfgeräten verwendet werden.

3. Verfahren nach Anspruch 1 oder 2, weiterhin umfassend:
Identifizieren des auf dem Speichermedium (20) zu dem Kraftfahrzeug gehörenden Identifikationsdatensatzes (29) anhand des eindeutigen Merkmals (21) mit einem zu einer Teilgruppe (31, 32) von Kraftfahrzeug-Prüfgeräten gehörigen Kraftfahrzeug-Prüfgerät;
Auslesen des identifizierten Identifikationsdatensatzes (29) des Kraftfahrzeuges aus dem Speichermedium (20);
Ermitteln von dritten Identifikationsdaten (24), welche für die Teilgruppe (31, 32) von Kraftfahrzeug-Prüfgeräten spezifisch sind;
Ergänzen des ausgelesenen Identifikationsdatensatzes (29) mit den dritten Identifikationsdaten (24);
Speichern des ergänzten Identifikationsdatensatzes (29) auf dem Speichermedium (20); und
Verwenden der dritten Identifikationsdaten (24) nur für den Betrieb aller Prüfgeräte der Teilgruppe (31, 32) von Kraftfahrzeug-Prüfgeräten.

4. Verfahren nach einem der vorangehenden Ansprüche, wobei das Speichermedium (20) ein zentraler Server oder ein RFID-Tag ist.

5. Verfahren nach einem der vorangehenden Ansprüche, wobei beim Speichern des Identifikationsdatensatzes (29) jeweils der vorher gespeicherte Identifikationsdatensatz (29) auf dem Speichermedium überschrieben wird.

6. Kraftfahrzeug-Prüfgerät (10), welches dazu ausgelegt ist, zum Betrieb an einem Kraftfahrzeug zur Identifikation des Kraftfahrzeuges ein eindeutiges Merkmal (12) des Kraftfahrzeuges, Basisidentifikationsdaten (13) des Kraftfahrzeuges und erste Identifikationsdaten (23) des Kraftfahrzeuges, welche für das Kraftfahrzeug-Prüfgerät (10) spezifisch sind, zu verwenden, **dadurch gekennzeichnet, dass** Mittel zum
Identifizieren des auf dem Speichermedium (20) zu dem Kraftfahrzeug gehörenden Identifikationsdatensatzes (29) anhand des eindeutigen Merkmals (21) vorgesehen sind; dass Mittel zum Auslesen des identifizierten Identifikationsdatensatzes (29) des Kraftfahrzeuges aus dem Speichermedium (20) vorgesehen sind; dass Mittel (3) zum Ermitteln der ersten Identifikationsdaten (23) des Kraftfahrzeuges (1), welche für das Kraftfahrzeug-Prüfgerät spezifisch sind, vorgesehen sind; das Mittel zum Ergänzen des ausgelesenen Identifikationsdatensatzes (29) mit den ersten Identifikationsdaten (23) vorgesehen sind; und dass Mittel zum Speichern des ergänzten Identifikationsdatensatzes (29) auf dem Speichermedium (20) vorgesehen sind.

7. Kraftfahrzeug-Prüfgerät (10) nach Anspruch 6, welches weiterhin dazu ausgelegt ist, zum Betrieb an dem Kraftfahrzeug zweite Identifikationsdaten (16) des Kraftfahrzeuges, welche für eine Gruppe von Prüfgeräten, der das Kraftfahrzeug-Prüfgerät (10) zugeordnet ist, zu verwenden.

8. Kraftfahrzeug-Prüfgerät (10) nach Anspruch 6 oder 7, **dadurch gekennzeichnet, dass** das Kraftfahrzeug-Prüfgerät (10) das eindeutige Merkmal (12) des Kraftfahrzeuges, die Basisidentifikationsdaten (13), die ersten Identifikationsdaten (17) und/oder die zweiten Identifikationsdaten (16) von einem zentralen Server oder einem RFID-Tag bezieht.

9. System, umfassend:
eine Mehrzahl von Kraftfahrzeug-Prüfgeräten (30, 31, 32); und
ein Speichermedium (38), auf welchem ein eindeutiges Merkmal (131) und
Basisidentifikationsdaten (133) eines Kraftfahrzeuges und eine Mehrzahl von ersten Identifikationsdaten (135, 136, 137), welche jeweils für eines der Mehrzahl von Kraftfahrzeug-Prüfgeräten (30, 31, 32) spezifisch sind, abgelegt sind, wobei die Kraftfahrzeug-Prüfgeräte (30, 31, 32) dazu ausgelegt sind, zum Betrieb an einem Kraftfahrzeug die Basisidentifikationsdaten (133) des Kraftfahrzeuges und
erste Identifikationsdaten (135, 136, 137), welche für das jeweilige Kraftfahrzeug-Prüfgerät (30, 31, 32) spezifisch sind, anhand des eindeutigen Merkmals (131) zu identifizieren und von dem Speichermedium (38) abzurufen, **dadurch gekennzeichnet, dass** mindestens eines der Kraftfahrzeug-Prüfgeräte (30, 31, 32) nach einem der Ansprüche 6 bis 8 ausgelegt ist.

10. System nach Anspruch 9, wobei auf dem Speichermedium (38) weiterhin eine Mehrzahl von zweiten Identifikationsdaten (134) welche jeweils für eine Teilgruppe (31, 32) der Mehrzahl von Kraftfahrzeug-Prüfgeraten spezifisch sind, abgelegt sind, und die Kraftfahrzeug-Prüfgeräte (31, 32) weiterhin dazu ausgelegt sind, zum Betrieb an dem Kraftfahrzeug die zweiten Identifikationsdaten (134), welche für diejenige Teilgruppe (31,32) spezifisch sind, der das Kraftfahrzeug-Prüfgerät zugeordnet ist, anhand des eindeutigen Merkmals (131) zu identifizieren und von dem Speichermedium (38) abzurufen.

11. System nach Anspruch 9 oder 10, wobei das Speichermedium (38) ein zentraler Server oder ein RFID-Tag ist.

## Claims

1. Method for identifying a motor vehicle for a plurality of motor vehicle testers (30, 31, 32), comprising:
ascertainment of an explicit feature (21) from the motor vehicle;
ascertainment of basic identification data (22) from the motor vehicle;
storage of the explicit feature (21) and of the basic identification data (22) in an identification data record (29) for this motor vehicle on a storage medium (20);
identification of the identification data record (29) associated with the motor vehicle on the storage medium (20) on the basis of the explicit feature (21) using a first (30) of the plurality of motor vehicle testers;
reading of the identified identification data record (29) of the motor vehicle from the storage medium (20);
ascertainment of first identification data (23) from the motor vehicle (1) that are specific to the first (30) of the plurality of motor vehicle testers;
augmentation of the read identification data record (29) with the first identification data (23);
storage of the augmented identification data record (29) on the storage medium (20);
identification of the identification data record (29) associated with the motor vehicle on the storage medium (20) on the basis of the explicit feature (21) using a second (31) of the plurality of motor vehicle testers;
reading of the identified identification data record (29) of the motor vehicle from the storage medium (20);
ascertainment of second identification data (25) from the motor vehicle that are specific to the second (31) of the plurality of motor vehicle testers;
augmentation of the read identification data record (29) with the second identification data (25); and storage of the augmented identification data record (29) on the storage medium (20).

2. Method according to Claim 1, wherein the basic identification data (22) of the identification data record (29) are used for operating all the plurality of motor vehicle testers (30, 31, 32), the first identification data (23) are used only for operating the first (30) of the plurality of motor vehicle testers, and the second identification data (25) are used only for operating the second (31) of the plurality of motor vehicle testers.

3. Method according to Claim 1 or 2, also comprising:
identification of the identification data record (29) associated with the motor vehicle on the storage medium (20) on the basis of the explicit feature (21) using a motor vehicle tester that is associated with a subgroup (31, 32) of motor vehicle testers;
reading of the identified identification data record (29) of the motor vehicle from the storage medium (20);
ascertainment of third identification data (24) that are specific to the subgroup (31, 32) of motor vehicle testers;
augmentation of the read identification data record (29) with the third identification data (24);
storage of the augmented identification data record (29) on the storage medium (20); and
use of the third identification data (24) only for operating all the testers of the subgroup (31, 32) of motor vehicle testers.

4. Method according to one of the preceding claims, wherein the storage medium (20) is a central server or an RFID tag.

5. Method according to one of the preceding claims, wherein the storage of the identification data record (29) involves the respective previously stored identification data record (29) on the storage medium being overwritten.

6. Motor vehicle tester (10) that is designed, for the purpose of operation on a motor vehicle, to identify the motor vehicle by using an explicit feature (12) from the motor vehicle, basic identification data (13) from the motor vehicle and first identification data (23) from the motor vehicle that are specific to the motor vehicle tester (10), **characterized in that** means for
identifying the identification data record (29) associated with the motor vehicle on the storage medium (20) on the basis of the explicit feature (21) are provided; **in that** means for reading the identified identification data record (29) of the motor vehicle from the storage medium (20) are provided; **in that** means (3) for ascertaining the first identification data (23) of the motor vehicle (1) that are specific to the motor vehicle tester are provided; **in that** means for augmenting the read identification data record (29) with the first identification data (23) are provided; and that means for storing the augmented identification data record (29) on the storage medium (20) are provided.

7. Motor vehicle tester (10) according to Claim 6, which is also designed, for the purpose of operation on the motor vehicle, to use second identification data (16) from the motor vehicle that are specific to a group of testers with which the motor vehicle tester (10) is associated.

8. Motor vehicle tester (10) according to Claim 6 or 7, **characterized in that** the motor vehicle tester (10) obtains the explicit feature (12) of the motor vehicle, the basic identification data (13), the first identification data (17) and/or the second identification data (16) from a central server or an RFID tag.

9. System comprising:
a plurality of motor vehicle testers (30, 31, 32); and
a storage medium (38) that stores an explicit feature (131) and basic identification data (133) from a motor vehicle and a plurality of first identification data (135, 136, 137) that are each specific to one of the plurality of motor vehicle testers (30, 31, 32),
wherein the motor vehicle testers (30, 31, 32) are designed, for the purpose of operation on a motor vehicle, to identify the basic identification data (133) of the motor vehicle and first identification data (135, 136, 137) that are specific to the respective motor vehicle tester (30, 31, 32) on the basis of the explicit feature (131) and to retrieve said data from the storage medium (38), **characterized in that** at least one of the motor vehicle testers (30, 31, 32) is designed according to one of Claims 6 to 8.

10. System according to Claim 9, wherein the storage medium (38) also stores a plurality of second identification data (134) that are each specific to a subgroup (31, 32) of the plurality of motor vehicle testers, and the motor vehicle testers (31, 32) are also designed, for the purpose of operation on the motor vehicle, to identify the second identification data (134) that are specific to that subgroup (31, 32) with which the motor vehicle tester is associated on the basis of the explicit feature (131) and to retrieve said data from the storage medium (38).

11. System according to Claim 9 or 10, wherein the storage medium (38) is a central server or an RFID tag.

## Revendications

1. Procédé d'identification d'un véhicule à moteur destiné à une pluralité d'appareils de test de véhicules à moteur (30, 31, 32), consistant à :
obtenir une caractéristique unique (21) du véhicule à moteur ;
obtenir des données d'identification de base (22) du véhicule moteur ;
stocker une caractéristique unique (21) et des données d'identification de base (22) dans un enregistrement de données d'identification (29) pour ledit véhicule à moteur sur un support d'enregistrement (20) ;
identifier l'enregistrement de données d'identification (29) appartenant au véhicule à moteur sur le support d'enregistrement (20) sur la base de la caractéristique unique (21) au moyen d'un premier (30) de la pluralité d'appareils de test de véhicule à moteur ;
lire l'enregistrement de données d'identification (29) identifié du véhicule à moteur depuis le support de stockage (20) ;
obtenir des premières données d'identification (23) du véhicule à moteur (1) qui sont spécifiques du premier (30) de la pluralité d'appareils de test de véhicules à moteur ;
compléter l'enregistrement de données d'identification (29) lu avec les premières données d'identification (23) ;
stocker l'enregistrement de données d'identification (29) complété sur le support de stockage (20) ;
identifier l'enregistrement de données d'identification (29) appartenant au véhicule à moteur sur le support d'enregistrement (20) sur la base de la caractéristique unique (21) avec un deuxième (31) de la pluralité d'appareils de test de véhicules à moteur ;
lire l'enregistrement de données d'identification (29) identifié du véhicule à moteur depuis le support d'enregistrement (20) ;
obtenir des deuxièmes données d'identification (25) du véhicule à moteur, qui sont spécifiques du deuxième (31) de la pluralité d'appareils de test de véhicules à moteur ;
compléter l'enregistrement de données d'identification (29) lu avec les deuxièmes données d'identification (25) ; et
stocker l'enregistrement de données d'identification (29) complété sur le support de stockage (20).

2. Procédé selon la revendication 1, dans lequel les données d'identification de base (22) de l'enregistrement de données d'identification (29) sont utilisées pour la mise en fonctionnement de la totalité de la pluralité d'appareils de test de véhicules à moteur (30, 31, 32), les premières données d'identification (23) ne sont utilisées que pour la mise en fonctionnement du premier (30) de la pluralité d'appareils de test de véhicules à moteur et les deuxièmes données d'identification (25) ne sont utilisées que pour la mise en fonctionnement du deuxième (31) de la pluralité d'appareils de test de véhicules à moteur.

3. Procédé selon la revendication 1 ou 2, consistant en outre à :
identifier l'enregistrement de données d'identification (29) appartenant au véhicule à moteur sur le support d'enregistrement (20) sur la base de la caractéristique unique (21) avec un appareil de test de véhicules à moteur appartenant à un groupe partiel (31, 32) d'appareils de test de véhicules à moteur ;
lire l'enregistrement de données d'identification (29) identifié du véhicule à moteur depuis le support d'enregistrement (20) ;
obtenir des troisièmes données d'identification (24) qui sont spécifiques des groupes partiels (31, 32) d'appareils de test de véhicules à moteur ;
compléter l'enregistrement de données d'identification (29) lu avec les troisièmes données d'identification (24) ;
stocker l'enregistrement de données d'identification (29) complété sur le support d'enregistrement (20) ; et n'utiliser les troisièmes données d'identification (24) que pour la mise en fonctionnement de la totalité des appareils de test du groupe partiel (31, 32) d'appareils de test de véhicules à moteur.

4. Procédé selon l'une quelconque des revendications précédentes, dans lequel le support d'enregistrement (20) est un serveur central ou une étiquette RFID.

5. Procédé selon l'une quelconque des revendications précédentes, dans lequel, lors du stockage de l'enregistrement de données d'identification (29), l'enregistrement de données d'identification (29) précédemment enregistré est respectivement écrasé sur le support d'enregistrement.

6. Appareil de test de véhicules à moteur (10) conçu pour utiliser une caractéristique unique (12) du véhicule à moteur, des données d'identification de base (13) du véhicule à moteur et des premières données d'identification (23) du véhicule à moteur qui sont spécifiques de l'appareil de test de véhicules à moteur (10) pour une mise en fonctionnement sur un véhicule à moteur à des fins d'identification du véhicule à moteur, **caractérisé en ce qu'**il est prévu des moyens destinés à
identifier l'enregistrement de données d'identification (29) appartenant au véhicule à moteur sur le support d'enregistrement (20) sur la base de la caractéristique unique (21) ; **en ce qu'**il est prévu des moyens destinés à lire l'enregistrement de données d'identification (29) identifié du véhicule à moteur depuis le support d'enregistrement (20) ; **en ce qu'**il est prévu des moyens (3) destinés à obtenir les premières données d'identification (23) du véhicule à moteur (1), lesquelles données sont spécifiques de l'appareil de test de véhicules à moteur ; **en ce qu'**il est prévu des moyens destinés à compléter l'enregistrement de données d'identification (29) lu avec les premières données d'identification (23) ; et **en ce qu'**il est prévu des moyens destinés à stocker l'enregistrement de données d'identification (29) complété sur le support d'enregistrement (20).

7. Appareil de test de véhicules à moteur (10) selon la revendication 6, qui est en outre conçu pour utiliser, pour une mise en fonctionnement sur le véhicule à moteur, des deuxièmes données d'identification (16) du véhicule à moteur qui sont spécifiques d'un groupe d'appareils de test qui est associé à l'appareil de test de véhicules à moteur (10).

8. Appareil de test de véhicules à moteur (10) selon la revendication 6 ou 7, **caractérisé en ce que** l'appareil de test de véhicules à moteur (10) utilise la caractéristique unique (12) du véhicule à moteur, les données d'identification de base (13), les premières données d'identification (17) et/ou les deuxièmes données d'identification (16) d'un serveur central ou d'une étiquette RFID.

9. Système comprenant :
une pluralité d'appareils de test de véhicules à moteur (30, 31, 32) ; et
un support de stockage (38) sur lequel sont stockées une caractéristique unique (131), des données d'identification de base (133) d'un véhicule à moteur et une pluralité de premières données d'identification (135, 136, 137) qui sont respectivement spécifiques de l'un de la pluralité d'appareils de test de véhicules à moteur (30, 31, 32), dans lequel les appareils de test de véhicules à moteur (30, 31, 32) sont conçus pour identifier, lors d'une mise en fonctionnement sur un véhicule à moteur, les données d'identification de base (133) du véhicule à moteur et des premières données d'identification (135, 136, 137) qui sont spécifiques de l'appareil de test de véhicules à moteur (30, 31, 32) respectif, sur la base de la caractéristique unique (131), et pour les lire depuis le support d'enregistrement (38), **caractérisé en ce qu'**au moins l'un des appareils de test de véhicules à moteur (30, 31, 32) est conçu selon l'une quelconque des revendications 6 à 8.

10. Système selon la revendication 9, dans lequel une pluralité de deuxièmes données d'identification (134) qui sont respectivement spécifiques d'un groupe partiel (31, 32) de caractéristiques d'appareils de test de véhicules à moteur sont stockées sur le support d'enregistrement (38), et dans lequel les appareils de test de véhicules à moteur (31, 32) sont en outre conçus pour identifier, pour une mise en fonctionnement sur le véhicule à moteur, les deuxièmes données d'identification (134) qui sont spécifiques du groupe partiel (31, 32) qui est associé à l'appareil de test de véhicules à moteur, sur la base d'une caractéristique unique (131) et pour les lire depuis le support d'enregistrement (38).

11. Système selon la revendication 9 ou 10, dans lequel le support d'enregistrement (38) est un serveur central ou une étiquette RFID.
